# EUROPEAN PATENT SPECIFICATION

(11) **EP 2 942 293 B1**
(45) Date of publication and mention of the grant of the patent: **02.08.2017**
(21) Application number: 14167074.5
(22) Date of filing: 05.05.2014
(51) Int. Cl.: B65B 25/00, B65G 47/90, B65G 29/02, A23G 7/00, B65B 11/28

(54) **Apparatus for wrapping confectionery products**
Vorrichtung zum Umwickeln Süßwaren
Appareil pour le conditionnement des produits de confiserie

(43) Date of publication of application: 11.11.2015
(73) Proprietor: M.C. AUTOMATIONS S.r.l., 40033 Casalecchio di Reno (IT)
(72) Inventor: Caselli, Mario, 40033 Casalecchio di Reno (BO) (IT)
(74) Representative: Manzella & Associati

(56) References cited:
- EP-A1- 0 733 548
- EP-A1- 1 671 885
- DE-A1- 10 138 943
- US-A- 1 226 622

## Description

### Technical Field

The present invention concerns an apparatus for wrapping confectionery products and the like.

### Background Art

It has been known that machines that provide an automatic wrapping of confectionery products are currently used. Known wrapping machines generally provide that the products to be wrapped be fed individually, one after another, along a feeding line, shaped for example by a conveyor belt. The single products are fed, in support on the conveyor belt, to an exit zone of the feeding line, at which suitable transfer means operate, bringing the products to a wrapping head. The cited transfer means are made for example by lift members which grasp the single products together with a relative wrapping sheet, suitably fed over the exit zone of the feeding line.

The wrapping head is provided with a series of grip members for the single products, angularly distributed about a horizontal rotation axis, and is suitable to be driven in rotation at pitch, to bring the products with the wrapping sheets at a series of working stations, at which the winding of the wrapping sheet around the same product, the closure of the wrapping and the discharge of the packaged product are carried out respectively.

Wrapping machines are known in which the feeding line for the products is arranged in front of the wrapping zone and in particular it is perpendicular to the vertical rotation plane of the wrapping head. Such frontal disposition is sometimes less convenient, because of the space required in the machine. As a matter of facts, it is preferred to feed the products to be wrapped according to a direction arranged longitudinally in line with the wrapping head, to let free the front zone of the machine as much as possible. The in-line feeding of the products is currently not carried out in manner simple and efficient, because of the functional requirements of the different working members which act in the transfer zone of the products to the wrapping head.

For example, patent application EP0733548 shows a wrapping machine comprising two wrapping heads which allow a suitable orientation of the single products. Nevertheless, such machine results to be complex both in building and in functioning, thus having limits in particular for high-speed working. Moreover, such wrapping machine requires a large space.

Patent application DE10138943 discloses a wrapping machine provided with a transfer device with two drums and with a wrapping head, for allowing the transferring of the single products according to the desired orientation. Such document discloses a transfer device for food products comprising a plurality of pliers devices each of which has a respective longitudinal axis and is mobile between a feed and entrance station for a series of products at which the device grasps a relative product and a load station for said product to a wrapping device. The pliers device has a first and a second jaw, mobile by means of respective command means between an open position and a closed position in which the jaws grasp a products at two sides. One of said jaws comprises respective stopping means suitable to define a position of the same jaw with respect to said longitudinal axis independently from the closure position reached by the other jaw. Also such machine has the same drawbacks previously cited, relatively to the complexity and to the large space required by the working members. Moreover, the structural complexity and the configuration of such members makes the cleaning hard.

### Disclosure

The task of the present invention is that of solving the cited problems, by providing an apparatus compact and which allows to wrap confectionery products in an easy and efficient way, in particular through the in-line feeding of the products.

Within such task, it is a further scope of the present invention that of providing an apparatus which allows to control the orientation of the products during the transfer step from the feeding line to the wrapping head.

A further scope is that of providing a machine which allows to make wrappings of any type in particular with two overlapped wrapping sheets and with products of any shape and size.

The cited scopes are attained, according to the present invention, by the apparatus for wrapping confectionery products according to claim 1.

### Description of Drawings

Details of the invention shall be more apparent from the detailed description of a preferred embodiment of the apparatus for wrapping confectionery products illustrated for indicative purposes in the attached drawings, wherein:

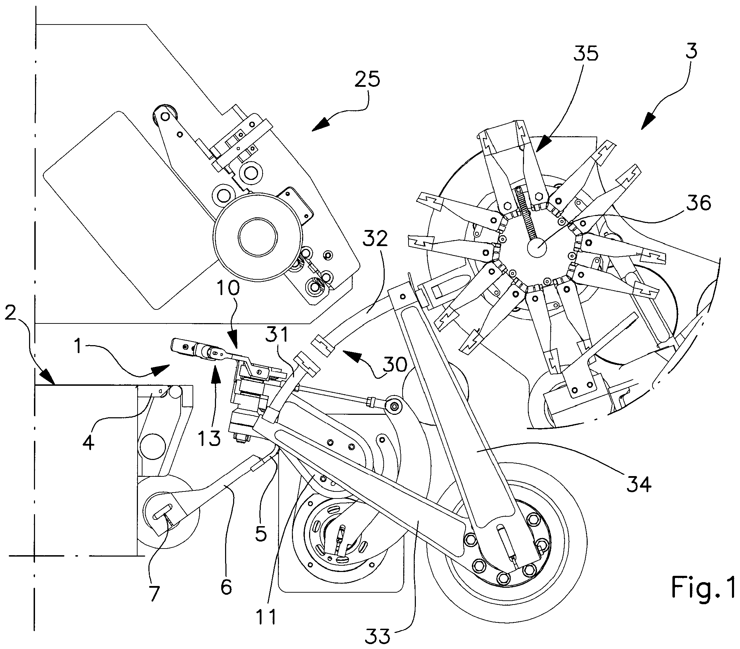

figure 1 shows a schematic front view of an apparatus for wrapping confectionery products according to the invention;
figures 2 and 3 show a perspective view of a transfer unit of the apparatus according to the invention in different working steps;
figure 4 shows a perspective view of an overturn member of the apparatus according to the invention;
figure 5 shows a corresponding front view.

### Best Mode

With particular reference to such figures, the feeding device for machines for wrapping confectionery products has been indicated its entirety with 1. The device 1 is suitable to pick the products arriving along a feeding line 2 and to transfer them to a wrapping head 3 of the wrapping machine. The feeding line 2 is shaped for example by a conveyor belt, on which the confectionery products, not represented for the sake of simplicity, are fed in succession in support on a flat lower face. The feeding line can anyway be shaped by transport means having a different configuration, in particular provided with suitable separation means for the products, provided with housing seats for the products, in a manner known per se.

At the exit of the conveyor belt of the feeding line 2, a support member 4 is arranged, attached to the framework of the wrapping machine and suitable to be an extension of the same feeding line. A stopping member 5 cooperates with the support member 4, being suitable to stop the single products in a pre-established position, substantially corresponding to a picking position of the feeding device 1. The stopping member 5 is borne protruding at the front of the feeding line 2 by means of a lever 6 tilting about a pivot 7. The pivot 7 is arranged with its axis perpendicular to the median longitudinal plane of the feeding line 2.

The feeding device 1 comprises a transfer and orientation unit 10 which is suitable to pick the fed products in the said picking position and to transfer them, suitably oriented, to a release zone, at which the same products are to be covered by a relative wrapping sheet.

The transfer and orientation unit 10 comprises a tilting arm 11 which is rotatable according to a rotation axis perpendicular to the vertical plane longitudinal to the feeding line 2; the tilting arm 11 is operated by suitable cam means, not represented, which receive the motion through a relative shaft 20. The tilting arm 11 shapes at its free end a fork 12 carrying a grip member 13 for the product to be transferred, having substantially the shape of pliers. More in particular, such grip member 13 is made up of a couple of levers 14, 15 pivoted each on a prong of the above mentioned fork 12 of the tilting arm 11, according to a same rotation axis defined by a pivoting pin 16. The levers 14, 15 carry respective opposite fixed jaws 17, 18, suitable to grasp the product to be transferred. The jaws 17, 18 are suitably mounted in interchangeable way on the respective levers 14, 15 according to the type and the size of the product to be transferred. In practice, each jaw shapes an abutment surface suitable to abut laterally a respective portion of the product, in a closure configuration.

The levers 14, 15 are attached to the free end of a respective rocker arm lever 21, 22 through respective tie elements 19, only one of which is represented in the figures; the tie elements 19 are pivoted to the levers 14, 15 and to the rocker arms 21, 22 through respective junction members 23. The rocker arms 21, 22 are supported rotatable according to a same rotation axis perpendicular to the vertical plane longitudinal to the feeding line 2, that is, parallel to the rotation axis of the tilting arm 11.

Downstream of the transfer and orientation unit 10, the feeding device has a lift unit 30, suitable to receive the products from the above mentioned transfer and orientation unit 10 and to transfer them to the wrapping head 3. The lift unit 30 comprises, in known manner, a lift 31 and a counter-lift 32, carried at the ends of respective radial arms 33, 34 which are operated in tilting manner according to a rotation axis perpendicular to the vertical plane longitudinal to the feeding line 2.

At the release zone by the grip member 13, the products to be wrapped are reached by a wrapping material fed by a feeding device 25. More in particular, it is possible to provide that the device 25 is suitable to feed a first wrapping sheet and a second wrapping sheet, which arrive, overlapped one another and suitably staggered in longitudinal direction, at the release zone for the products.

The wrapping sheets are obtained by ribbons of sheet material which are unrolled from relative coils. The ribbons are fed, overlapped one another, along an unrolling plane perpendicular to the vertical plane longitudinal to the feeding line 2, through the action of counter-rolls.

The ribbons dragged by the unrolling rolls are subsequently cut through cut means provided with relative blades, which are suitable to perform simultaneously the cut of such overlapped ribbons, to obtain the above mentioned wrapping sheets. The sheets are fed through a couple of counter-rotating rolls, operated at a peripheral speed equal to the speed of the unrolling rolls.

At the exit from the transport rolls, the sheets are fed along separate paths of differentiated length, at the same peripheral speed, to cause the baking of the second sheet with respect to the first sheet. In particular, the second sheet is fed along a curvilinear path shaped by the guide means, while the first sheet is fed along the unrolling plane.

In order to ease the separation of the sheets, the transport rolls have a series of canalized holes, suitably distributed, suitable to be set in connection with aspiration means to create a depression localized on the cylindrical surface of the same rolls. Obviously, such depression is created in a limited zone of the surface of the transport rolls, that is the zone of grasping and drawing of the sheets, and ends in the moment in which the sheets detach for following the cited separate paths.

Usefully, the second sheet is kept by the cited aspiration means on the relative transport roll for a time relatively longer than the first sheet, to ensure its detachment.

The second sheet, after having completed the cited curvilinear path, is then brought back to the position overlapped to the first sheet which, by advancing on the longitudinal plane, has done a rectilinear shorter way. The overlapped sheets are grasped by counter-rotating placer rolls and fed by these latter towards the release zone of the products to be wrapped.

It is to be underlined the fact that in the cited release zone the two wrapping sheets are longitudinally staggered as a consequence of the separate paths of differentiated length followed at the same speed. In particular, the first sheet, arranged below, has a front portion protruding with respect to the second sheet; such protruding portion is suitable to be joined to wound part by means of welding or by means of a suitable glue to carry out the closure of the wrap.

At the cited release zone, the product is reached by two longitudinally staggered sheets, fed by the feeding device 25. The cited lift unit 30 is suitable to grasp the product together with the wrapping sheets and to carry out the transport from the release zone to the wrapping heads 3, rotating in the vertical plane longitudinal to the feeding line 2.

The wrapping head 3 is provided, in known way, with pliers members 35 angularly distributed about the horizontal rotation axis 36 of the same wrapping head 3. After being passed through successive working stations arranged along the peripheral zone of the wrapping head 3, the product is released on suitable spacing means.

The functioning of the apparatus for wrapping confectionery products is described in the following.

The products to be wrapped are fed in line on the conveyor belt of the feeding line 2. At the end of such feeding line, each single product is brought on the support member 4, against the stopping member 5.

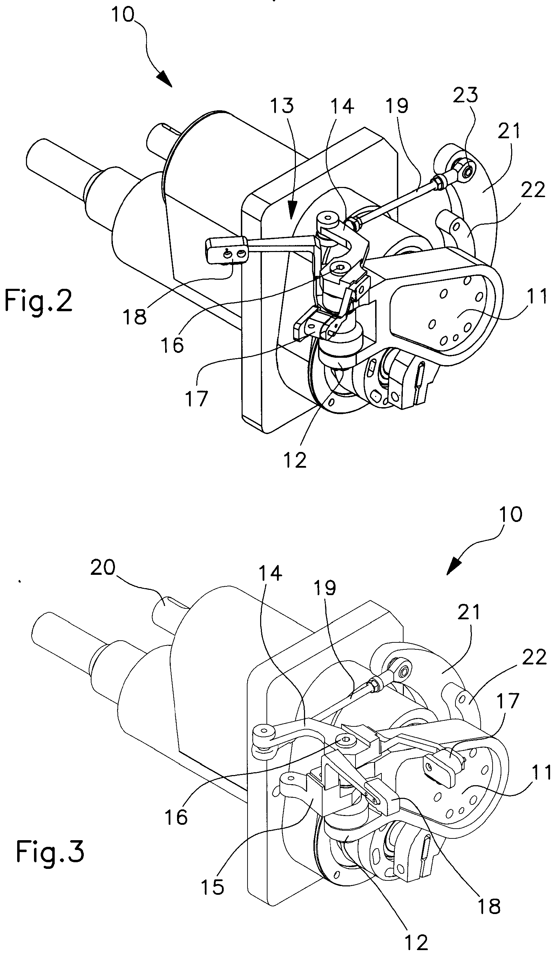

The transfer and orientation unit 10 is in such step prearranged with the jaws 17, 18 of the grip member 13 in open configuration in the picking position (see in particular figure 2).

Subsequently, the closure of the jaws 17, 18 of the grip means 13 is operated through the angular rotation of the levers 14, 15. In such way is thus carried out the grip of a single product prearranged in the picking position on the support member 4. Obviously, it is possible to provide that the product to be wrapped is arranged in the picking position by the grip member 13 through members of different type, such as for example an overturn member for the same product.

Subsequently, the tilting of the arm 11 which carries the grip member 13 is operated, to transfer the product gripped between the jaws 17, 18 from the picked up position to a release position in which the same product is grasped between the lift 31 and the counter-lift 32 of the lift unit 30.

At the same time, the rocker arms 21, 22 operate the rotation in the same direction of the levers 14, 15 of the grip unit 13, to cause a corresponding angular rotation of the jaws 17, 18 which carry the product to be wrapped (see figure 3). Suitably, such angular rotation extends for an arc of 90°. In such way, the product to be wrapped reaches the release position being shifted on a vertical plane parallel to the picking plane, outgoing from the feeding line 2.

Once arrived at the release zone, the product is reached at its top by the wrapping sheet; as an alternative, it is possible to provide that the device 25 feeds over the product two overlapped and longitudinally staggered sheets, as it was previously described. The actuation means bring then the jaws 17, 18 of the grip member 13 in the open position to release the so covered product. At the same time, the lift means 30 grasp, in known way, the product together with the wrapping sheet and bring it to the wrapping head 3. In particular, the wrapping head 3 is suitable to receive the product to complete the wrapping operations.

While the lift means 30 move the product towards the wrapping head 3, the transfer unit 10 performs the return motion from the release zone to the picking up zone. During such comeback motion, the jaws 17, 18 of the grip member 13 are kept in the open position, ready to perform the next picking.

In the meantime, a new product arrives at the support member 4. Next, a new picking, transfer and release cycle can subsequently start, according to the preceding description.

The apparatus according to the invention attains thus the scope of performing in a simple and efficient way the wrapping of confectionery products and the like.

The apparatus allows to carry out in an optimal way the wrapping of the products in a reduced space thanks to the specific displacement of the different devices composing the same apparatus on the same longitudinal vertical plane.

A feature of the invention is that the device 25 for the feeding the wrapping material, allows to feed two wrapping sheets suitably staggered, allowing in an easy and efficient way the wrapping with double sheet for products of any shape and size.

Moreover, the transfer cycle made by the transfer unit 10 can be easily adjusted to result in phase with the feeding operations of the products. In particular, the time required by the transfer unit for completing a transfer cycle can be optimized on the basis of the time required for the separation and the arrangement of a new product in the picking position.

In particular, the presence of the transfer device allows to obtain more space in the products picking zone of the feeding line, thus easing the cleaning operations, required for the handling of food products. In particular, the transfer means are suitable to lift in suitable way the products from the feeding line, allowing as well to easily carry out the inspection operations of the members of the apparatus. The lifting of the products finally allows to associate the wrapping sheets directly with the products, in a suitable way for performing subsequent wrapping operations.

A further advantage of the device according to the invention is due to the constructive compactness which allows, in a very reduced space, to house the members provided for the transfer and for the control of the orientation of each product fed to the wrapping head.

Finally, it is necessary to underline that the device according to the invention can be sized and used for any type of confectionery product, in particular of any size and shape.

The apparatus described as an example is susceptible of numerous modifications depending on the different needs.

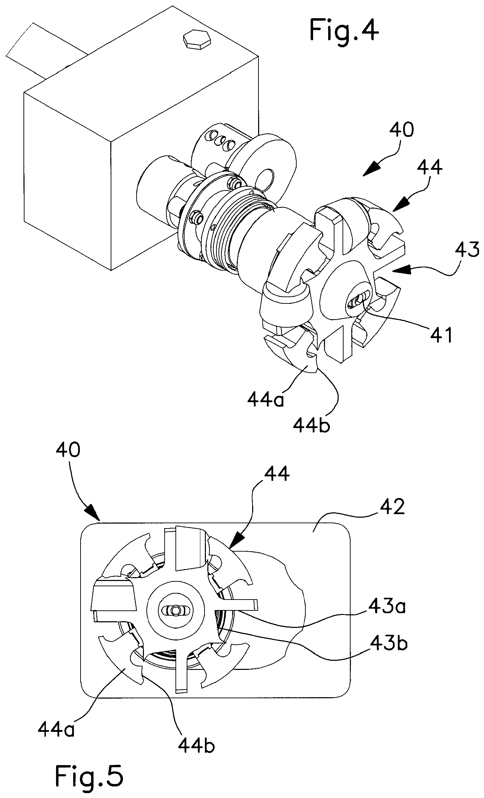

In particular, in case it is required to wrap products having a twist on the top of the type of "Boeri" chocolates and the like, being dome-shaped starting from a flat base, it is provided the use of an overturn member 40 downstream of the feeding line 2, shown in figures 4 and 5. In practice, the overturn member 40 is arranged as a replacement of the above mentioned stopping member. The overturn member 40 is substantially star-shaped and is rotatable about an axis perpendicular to the longitudinal plane of the transport line.

The star-shaped overturn member 40 is preferably made up of a shaped disc which is constrained to a shaft 41 suitably carried in overhanging manner and projecting from a plate 42 fixed by means of conventional screw means to the framework of the apparatus and driven in unidirectional rotation by known motor members. Conveniently, it is provided that the shaft 41, on which the overturn member 40 is keyed, constitutes the outlet shaft of an intermittent unit with parallel axes, suitable to convert the uniform motion of an inlet shaft into an intermittent motion.

The disc shaping the overturn member 40 peripherally has shaped seats 43, distributed regularly with respect to the rotation axis. In particular, such shaped seats 43 are placed at an angular distance equal to the rotation to be applied to the products, preferably of 90°. Each shaped seat 43 substantially shapes one half of the median longitudinal profile of the products to be overturned, to receive and house the product firmly. More precisely, the shaped seat 43 has a linear portion 43a against which the base of the product is to be carried in support; starting from the internal end of the linear portion 43a a curvilinear portion 43b extends, copying one half of the longitudinal median profile of the dome-shaped product, or a part of it.

Suitably, at each shaped seat 43 of the overturn member 40 a holding member 44 is placed, being suitable to keep the product inserted in the same shaped seat 43 in the overturning step. Such holding member 44 is substantially made up of a hammer-shaped member, mounted tilting at the vane which shapes the above mentioned shaped seat 43 inside the body of the star 40; the hammer shapes in particular a head 44a having a dome-shaped working surface 44b which copies the upper profile of the product.

The holding member 44 is operated in relative alternated motion with respect to the overturn member 40 through suitable cam means associated with the intermittent member. The holding member 44 is moreover suitably sprung in order not to damage the product in the grasping step.

The product to be wrapped outgoing from the feeding line 2 is inserted inside a shaped seat 43 of the overturn member 40, prearranged in front of such feeding line.

In such step, the holding member 44 is initially lifted, so as not to hinder the entry of the product inside the shaped seat 43. When the product has been inserted, the holding member 44 angularly rotates to lock the same product inside the seat 43. In particular, the product is in support with its base on the linear portion 43a of the seat 43, in contact at one side against the dome-shaped curvilinear portion 43b of the same seat and resiliently locked on the upper part of the dome by the dome-shaped surface 44b of the holding member 44.

The overturn member 40, hence, rotates of a pre-established angle, in particular equal to 90°, carrying out in such way the overturn of the product, firmly housed inside the respective seat 43, where it is kept by the holding member 44. When the product has been overturned, the holding member 44 angularly rotates in opposite direction, to free the product which is at the same time grasped by the jaws 17, 18 of the gripping means 13 of the transfer unit 10. The cycle continues then as it was previously described.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Apparatus for wrapping confectionery products **characterized in that** it comprises
a feeding line (2) for feeding an ordered succession of confectionery products to be wrapped to a picking zone;
a transfer and orientation unit (10) comprising a tilting arm (11) operated in alternated motion on a vertical plane longitudinal to said feeding line (2), for picking single confectionery products at said picking zone and for transferring the same confectionery products from said picking zone to a spaced release zone;
a grip member (13) for said single confectionery products to be transferred, substantially having the shape of pliers, carried by said tilting arm (11) and provided with a couple of levers (14, 15) carrying respective jaws (17, 18) of said pliers;
kinematic means (21, 22) suitable to command the angular rotation of said levers (14, 15) of the grip member (13) for performing, with the subsequent tilting motion of said arm (11) of the transfer and orientation member (10), the shifting of said products to be wrapped on a vertical plane parallel to said plane longitudinal to the feeding line (2);
a feeding device (25) of a wrapping material suitable to feed at least one sheet of said wrapping material at said release zone for said confectionery products to be wrapped;
lift means (30) suitable to grasp a said confectionery product together with said sheet of wrapping material at said release zone and to perform their transport along a path created on a vertical plane parallel to said plane longitudinal to the said feeding line (2);
a wrapping head (3) suitable to rotate on said vertical plane longitudinal to said feeding line (2) and to complete the packaging of said confectionery product received by said lift means (30) together with said sheet of wrapping material;
an exit station arranged on said vertical plane longitudinal to said feeding line (2) and suitable to receive said wrapped confectionery product.

2. Apparatus according to claim 1, **characterized in that** it comprises an overturn member (40) peripherally shaping at least one shaped seat (43) suitable to receive a product outgoing from said feeding line (2) and at least one holding member (44) associated with said overturn member (40) for holding said product at said shaped seat (43), said overturn member (40) being rotatable about an axis perpendicular to said vertical plane longitudinal to said feeding line (2) and being suitable to be operated in angular rotation for rotating said product inserted into said shaped seat (43) from a picking configuration to an overturned configuration at which said product held by said holding member (44) is predisposed to be grasped by said jaws (17, 18) of the grip member (13).

3. Apparatus according to claim 1 or 2 **characterized in that** said feeding device (25) of a wrapping material is suitable to feed a wrapping material comprising a first wrapping sheet and a second wrapping sheet, overlapped one another, and suitably longitudinally staggered.

4. Apparatus according to claim 1 or 2, **characterized in that** said levers (14, 15) of the grip member (13) are pivoted on said tilting arm (11) according to a rotation axis laying on a plane perpendicular to the rotation axis of the same tilting arm (11).

5. Apparatus according to claim 1 or 2, **characterized in that** said kinematic means comprise a couple of rocker arm levers (21, 22) rotatable according to a same rotation axis perpendicular to said vertical plane longitudinal to the feeding line (2) and articulated respectively to said levers (14, 15) of the grip means (13) through relative tie-rods (19).

6. Apparatus according to claim 2, **characterized in that** said overturn member (10) is star-shaped, to define peripherally a plurality of said shaped seats (13), regularly distributed with respect to the rotation axis.

7. Apparatus according to claim 2 or 6, **characterized in that** said holding member (44) comprises a hammer-shaped element, mounted tilting at a respective vane which defines said shaped seat (43) of the overturn member (40).

8. Apparatus according to claim 1, **characterized in that** at the end of the feeding line (2) at said picking zone a support member (4) and stopping means (5) are arranged being suitable to stop a single product for allowing the grasping by said jaws (17, 18) of the grip means (13).

## Patentansprüche

1. Vorrichtung zum Einwickeln von Süßwarenprodukte **dadurch gekennzeichnet, dass** sie eine Zuführlinie (2) umfasst, um geordnet aufeinanderfolgende, einzuwickelnde Süßwarenprodukte einem Entnahmebereich zuzuführen;
ein Übertragungs- und Ausrichtungsorgan (10), das einen Schwenkarm (11) umfasst, der mit Hin- und Herbewegung auf einer vertikalen Ebene längs zur genannten Zuführlinie (2) betätigt wird, um einzelne Süßwarenwarenprodukte am genannten Entnahmebereich zu entnehmen und dieselben Süßwarenprodukte von dem genannten Entnahmebereich zu einem entfernten Abgabebereich zu übertragen;
ein Greiforgan (13) der genannten, zu übertragenden einzelnen Süßwarenprodukte, das im Wesentlichen die Form eines Greifers hat, von dem genannten Schwenkarm (11) gehalten und mit einem Hebelpaar (14, 15) ausgestattet, das die jeweiligen Backen (17, 18) des genannten Greifers trägt;
kinematische Mittel (21, 22), die dazu geeignet sind, die Winkelrotation der genannten Hebel (14, 15) des Greiforgans (13) zu steuern, um gleichzeitig mit der Schwenkbewegung des genannten Arms (11) des Übertragungs- und Ausrichtungsorgans (10), die Verschiebung der genannten einzuwickelnden Produkte auf eine vertikale Ebene parallel zur genannten Ebene längs zur Zuführlinie (2) durchzuführen;
eine Zuführvorrichtung (25) eines Einwickelmaterials, die dazu geeignet ist, mindestens ein Blatt des genannten Einwickelmaterials am genannten Abgabebereich der genannten einzuwickelnden Süßwarenprodukte zuzuführen;
Hebemittel (30), die dazu geeignet sind, ein genanntes Süßwarenprodukt zusammen mit dem genannten Blatt des Einwickelmaterials an dem genannten Abgabebereich zu greifen und entlang einer Bahn zu transportieren, die auf einer vertikalen Ebene parallel zur genannten Ebene längs zur genannten Zuführlinie (2) entwickelt wurde;
ein Verpackungskopf (3), der dazu geeignet ist, auf der genannten vertikalen Ebene längs zur genannten Zuführlinie (2) zu rotieren und das Verpacken des genannten Süßwarenprodukts abzuschließen, das von den genannten Hebemitteln (30) zusammen mit dem genannten Blatt des Einwickelmaterials erhalten wurde; eine Ausgangsstation, die auf der genannten vertikalen Ebene parallel längs zur genannten Zuführlinie (2) angeordnet und dazu geeignet ist, das genannte eingewickelte Süßwarenprodukt zu empfangen.

2. Vorrichtung nach Anspruch 1, **dadurch gekennzeichnet, dass** es ein Kipporgan (40) umfasst, das peripher mindestens einen geformten Sitz (43) bildet, der dazu geeignet ist, ein Produkt im Ausgang aus der genannten Zuführlinie (2) zu empfangen und mindestens ein Rückhalteorgan (44), das mit dem genannten Kipporgan (40) verbunden ist, um das genannte Produkt am genannten geformten Sitz (43) zurückzuhalten, wobei das genannte Kipporgan (40) um eine Achse drehbar ist, die senkrecht zur genannten vertikalen Ebene längs zur Zuführlinie (2) ist und wobei es dazu geeignet ist, in Winkelrotation betätigt zu werden, um das genannte, in den genannten geformten Sitz (43) eingeführte Produkt aus einer Entnahmekonfigurierung in eine gekippte Konfigurierung zu drehen, an der das genannte vom genannten Rückhalteorgan (44) zurückgehaltene Produkt vorbereitet wird, um von den genannten Backen (17, 18) des Greiforgans (13) gegriffen zu werden.

3. Vorrichtung nach Anspruch 1 oder 2, **dadurch gekennzeichnet, dass** die genannte Zuführvorrichtung (25) eines Einwickelmaterials dazu geeignet ist, ein Einwickelmaterial zuzuführen, das ein erstes und ein zweites Einwickelblatt umfasst, die übereinander liegen und in Längsrichtung passend verschoben sind.

4. Vorrichtung nach Anspruch 1 oder 2, **dadurch gekennzeichnet, dass** die genannten Hebel (14, 15) des Greiforgans (13) auf drehbare Weise an dem genannten Schwenkarm (11) verzapft sind, nach einer Rotationsachse, die auf einer zur Rotationsachse desselben Schwenkarms (11) senkrechten Ebene ruht.

5. Vorrichtung nach Anspruch 1 oder 2, **dadurch gekennzeichnet, dass** die genannten kinematischen Mittel ein Paar Kipphebel (21, 22) umfassen, die nach einer selben Rotationsachse, die senkrecht zur genannten vertikalen Ebene längs zur Zuführlinie (2) ist, drehbar sind und gegliedert im Verhältnis zu den genannten Hebeln (14, 15) des Greiforgans (13) mittels entsprechender Zugstangen (19).

6. Vorrichtung nach Anspruch 2, **dadurch gekennzeichnet, dass** das genannte Kipporgan (10) sternförmig ist, so dass es peripher eine Vielzahl der genannten geformten Sitze definiert (13), die im Verhältnis zur Rotationsachse regelmäßig verteilt sind.

7. Vorrichtung nach Anspruch 2 oder 6, **dadurch gekennzeichnet, dass** das genannte Rückhalteorgan (44) ein Element umfasst, das hammerförmig ist und schwingend an ein jeweiliges Fach montiert ist, das den genannten geformten Sitz (43) des Kipporgans (40) definiert.

8. Vorrichtung nach Anspruch 1, **dadurch gekennzeichnet, dass** am Ende der genannten Zuführlinie (2) an dem genannten Entnahmebereich ein Stützorgan (4) und Halteorgane (5) angeordnet sind, die dazu geeignet sind, ein einzelnes Produkt anzuhalten, um das Greifen durch die genannten Backen (17, 18) des Greiforgans (13) zu gestatten.

## Revendications

1. Appareil pour envelopper des produits de confiserie, **caractérisé en ce qu'**il comprend une ligne d'alimentation (2) pour alimenter une succession ordonnée de produits de confiserie à envelopper à une zone de prélèvement ;
une unité de transfert et d'orientation (10) comprenant un bras oscillant (11) actionné avec un mouvement alternatif dans un plan vertical longitudinal à ladite ligne d'alimentation (2), pour prélever les produits individuels de confiserie au niveau de ladite zone de prélèvement et transférer les mêmes produits de confiserie à partir de ladite zone de prélèvement à une zone de délivrance située à distance ;
un organe de préhension (13) desdits produits individuels de confiserie à transférer, ayant sensiblement la forme d'une pince, porté par ledit bras oscillant (11) et muni d'une paire de leviers (14, 15) portant des respectives mâchoires (17, 18) de ladite pince,
des moyens cinématiques (21, 22) aptes à commander la rotation angulaire desdits leviers (14, 15) de l'organe de préhension (13) pour effectuer, simultanément avec le mouvement d'oscillation dudit bras (11) de l'organe de transfert et d'orientation (10), le déplacement desdits produits à envelopper dans un plan vertical parallèle audit plan longitudinal à la ligne d'alimentation (2) ;
un dispositif d'alimentation (25) d'un matériau d'emballage apte à alimenter au moins une feuille dudit matériau d'emballage au niveau de ladite zone de délivrance desdits produits de confiserie à envelopper ;
des moyens de levage (30) aptes à saisir un dit produit de confiserie conjointement avec ladite feuille de matériau d'emballage au niveau de ladite zone de délivrance et à effectuer leur transport le long d'une trajectoire créée dans un plan vertical parallèle audit plan longitudinal à ladite ligne d'alimentation (2) ;
une tête d'emballage (3) apte à tourner sur ledit plan longitudinal vertical à ladite ligne d'alimentation (2) et à compléter l'emballage dudit produit de confiserie reçu par lesdits moyens de levage (30) conjointement à ladite feuille de matériau d'emballage ;
une station de sortie disposée sur ledit plan vertical longitudinal à ladite ligne d'alimentation (2) et apte à recevoir ledit produit de confiserie enveloppé.

2. Appareil selon la revendication 1, **caractérisé en ce qu'**il comprend un élément de renversement (40) formant périphériquement au moins un siège profilé (43) apte à recevoir un produit en sortie de ladite ligne d'alimentation (2) et au moins un élément de retenue (44) associé audit élément de renversement (40) pour retenir ledit produit au niveau dudit siège profilé (43), ledit élément de renversement (40) pouvant tourner autour d'un axe perpendiculaire audit plan vertical longitudinal à la ligne d'alimentation (2) et étant apte à être entraîné en rotation angulaire pour faire tourner ledit produit introduit dans ledit siège profilé (43) à partir d'une configuration de prélèvement à une configuration renversée au niveau de laquelle ledit produit retenu par ledit élément de retenue (44) est prédisposé de manière à être saisi par lesdites mâchoires (17, 18) de l'organe de préhension (13).

3. Appareil selon la revendication 1 ou 2, **caractérisé en ce que** ledit dispositif d'alimentation (25) d'un matériau d'emballage est apte à alimenter un matériau d'emballage comprenant une première feuille d'emballage et une seconde feuille d'emballage superposées et longitudinalement décalées de façon appropriée.

4. Appareil selon la revendication 1 ou 2, **caractérisé en ce que** lesdits leviers (14, 15) de l'organe de préhension (13) sont montés pivotants sur ledit bras oscillant (11) selon un axe de rotation se trouvant dans un plan perpendiculaire à l'axe de rotation du même bras oscillant (11).

5. Appareil selon la revendication 1 ou 2, **caractérisé en ce que** lesdits moyens cinématiques comprennent une paire de leviers culbuteurs (21, 22) pouvant tourner selon un même axe de rotation perpendiculaire audit plan vertical longitudinal à la ligne d'alimentation (2), et articulés, respectivement, auxdits leviers (14, 15) de l'organe de préhension (13) par l'intermédiaire des relatifs tirants (19).

6. Appareil selon la revendication 2, **caractérisé en ce que** ledit élément de renversement (10) est conformé en étoile de manière à définir périphériquement une pluralité desdits sièges profilés (13), répartis régulièrement par rapport à l'axe de rotation.

7. Appareil selon la revendication 2 ou 6, **caractérisé en ce que** ledit élément de retenue (44) comprend un élément en forme de marteau, monté oscillant au niveau d'un respectif compartiment définissant ledit siège profilé (43) de l'élément de renversement (40).

8. Appareil selon la revendication 1, **caractérisé en ce qu'à** l'extrémité de ladite ligne d'alimentation (2) au niveau de ladite zone de prélèvement sont disposés un élément de support (4) et des moyens d'arrêt (5) aptes à arrêter un seul produit pour permettre la préhension par lesdites mâchoires (17, 18) de l'organe de préhension (13).
